# EUROPÄISCHE PATENTANMELDUNG

(11) **EP 0 655 700 A1**
(43) Veröffentlichungstag der Anmeldung: **31.05.1995**
(21) Anmeldenummer: 94810645.5
(22) Anmeldetag: 09.11.1994
(51) Int. Cl.: G06K 1/12

(54) **Beschriftung eines Metallbehälters**

(30) Priorität: 24.11.1993 CH 3506/93
(71) Anmelder: Kuhn, Harri, CH-8045 Zürich (CH)
(72) Erfinder: Kuhn, Harri, CH-8045 Zürich (CH)
(74) Vertreter: Münch, Otto

(57) **Zusammenfassung**

Die Beschriftung, insbesondere ein Bar-Code, wird direkt auf die Behälterwand mittels eines Laserstrahls aufgebracht. Der Behälter besteht vorzugsweise aus nichtrostendem Stahl. Die Oberfläche bleibt dabei absolut glatt, und die Beschriftung ist resistent gegen aggressive Reinigungsmittel. Dadurch kann die Logistik mit solchen Behältern erheblich rationalisiert werden.

## Beschreibung

Behälter für Getränke sind sehr schwer zu etikettieren, weil sie mit aggressiven, z.B. heissen Flüssigkeiten gereinigt werden und weil keine Ritzen vorhanden sein dürfen, die zur Ansammlung von Verunreinigungen neigen. Das Beschriften solcher Behälter stellt deshalb ein seit Jahren nicht gelöstes Problem dar.

Der vorliegenden Erfindung liegt die Aufgabe zugrunde, dieses Problem zu lösen. Diese Aufgabe wird durch die Merkmalskombination der Ansprüche 1 und 2 gelöst.

Beim "Einbrennen" der Beschriftung mittels des Laserstrahls wird der Kohlenstoff im Gefüge der Oberfläche der Behälterwand geschwärzt, sodass die Beschriftung dunkel erscheint. Die durch den Laserstrahl hervorgerufene Verfärbung des Materials entspricht der Veränderung, die ein Schweissbrenner auf der Metalloberfläche hinterlässt. Die Oberfläche wird in ihrer Qualität nicht verändert. Sie bleibt vollkommen glatt. Die Beschriftung ist absolut resistent gegen Säuren und Laugen, auch bei erhöhten Temperaturen. Durch die erfindungsgemässe Lösung wird es erstmals möglich, nicht rostende Stahlbehälter für Lebensmittel und Getränke dauerhaft und lebensmittelgesetzeskonform zu beschriften. Dadurch kann die Logistik mit diesen Behältern erheblich rationalisiert werden.

Von besonderem Interesse sind als Beschriftung dabei Bar-Codes. Mit einem geeigneten Laser-Gerät ist ein solcher Bar-Code in etwa einer halben Minute auf dem Behälter angebracht, sodass die Beschriftung sehr preiswert ist.

## Patentansprüche

1. Verfahren zum Beschriften eines Metallbehälters, insbesondere für Lebensmittel und Getränke, dadurch gekennzeichnet, dass die Beschriftung direkt auf die Behälterwand mittels eines Laserstrahls aufgebracht wird.

2. Nach dem Verfahren gemäss Anspruch 1 beschrifteter Metallbehälter, dadurch gekennzeichnet, dass die mit einem Laserstrahl hergestellte Beschriftung direkt auf der Behälterwand angebracht ist.

3. Behälter nach Anspruch 2, wobei die Beschriftung einen Bar-Code umfasst.

4. Behälter nach Anspruch 2 oder 3, wobei er aus nichtrostendem Stahl besteht.
